# FASCICULE DE BREVET EUROPEEN

(11) **EP 0 981 837 B1**
(45) Date de publication et mention de la délivrance du brevet: **26.03.2003**
(21) Numéro de dépôt: 98924368.8
(22) Date de dépôt: 04.05.1998
(51) Int. Cl.: H01Q 3/26, H01Q 21/22, G01S 7/40

(54) **ANTENNE ACTIVE A RESEAU D'ELEMENTS RAYONNANTS A ARCHITECTURE REDONDANTE**
AKTIVE ANTENNE AUS EINER GRUPPE VON STRAHLERELEMENTEN IN EINER REDUNDANTEN ARCHITEKTUR
ACTIVE ANTENNA COMPRISING RADIATING ELEMENTS WITH REDUNDANT ARCHITECTURE

(30) Priorité: 05.05.1997 FR 9705508
(43) Date de publication de la demande: 01.03.2000
(73) Titulaire: ALCATEL, 75008 Paris (FR)
(72) Inventeur: DOLMETA, Florence, F-31270 Cugnaux (FR); VOISIN, Philippe, F-31170 Tournefeuille (FR)
(74) Mandataire: Lamoureux, Bernard
(86) Numéro de dépôt international: FR9800890
(87) Numéro de publication internationale: WO98050979

(56) Documents cités:
- EP-A- 0 523 422
- EP-A- 0 664 574
- GB-A- 2 013 983
- US-A- 4 904 831
- US-A- 4 949 090
- US-A- 5 083 131
- US-A- 5 517 200

## Description

L'invention est relative à une antenne active à réseau d'éléments rayonnants à architecture redondante.

Pour émettre ou recevoir des rayonnements électromagnétiques, notamment dans le domaine des hyperfréquences, on utilise, selon les besoins, divers types d'antennes. L'antenne active à réseau d'éléments rayonnants est particulièrement intéressante car elle permet un diagramme d'émission ou de réception qui peut être configuré à volonté ; elle permet aussi d'engendrer plusieurs diagrammes d'émission ou de réception.

Les éléments du réseau d'une même antenne sont, en général, de même type, c'est-à-dire qu'ils sont tous soit planaires, soit sous forme de cornet, soit des dipôles, soit des hélices, etc. L'amplitude et la phase du signal d'alimentation de chaque élément détermine les caractéristiques du diagramme de rayonnement.

Un réseau formateur de faisceau est prévu pour alimenter les éléments. Ce réseau comporte des déphaseurs et, le cas échéant, des atténuateurs. Le nombre de sorties de ce réseau est égal au nombre d'éléments. Chaque sortie est reliée à un élément par l'intermédiaire d'un amplificateur de puissance et, éventuellement, d'un filtre. Dans le cas d'une antenne de réception, à la place d'un amplificateur de puissance, on prévoit un amplificateur à faible bruit. La voie associée à un élément rayonnant est appelée une chaîne active.

Le réseau formateur de faisceau fournit à chaque élément un signal d'une amplitude et d'une phase adaptées au diagramme de rayonnement souhaité.

Dans certaines antennes, la programmation du réseau formateur de faisceau est modifiable. Dans ce cas, le réseau est dit actif. Dans le cas contraire (la programmation n'est pas modifiable), le réseau est dit passif.

De telles antennes sont notamment utilisées à bord de véhicules, en particulier de satellites ou véhicules spatiaux. Pour les applications embarquées, telles que les applications spatiales, il est nécessaire de prévoir des dispositions qui limitent les effets des pannes éventuelles sur les performances de l'antenne, c'est-à-dire qui permettent à l'antenne de satisfaire à des spécifications au cours d'une durée de vie déterminée malgré une occurrence de pannes décidée a priori.

Les dégradations pouvant se produire du fait des pannes sont, pour une antenne d'émission, une diminution de la Puissance Isotrope Rayonnée Equivalente (P.I.R.E.), pour la réception, le rapport G/T (G est le gain et T la température de bruit de l'antenne) et, dans les deux cas, une remontée des lobes secondaires, c'est-à-dire une altération du diagramme spécifié d'émission ou de réception.

En général, les pannes interviennent sur les chaînes actives.

Diverses solutions sont utilisées jusqu'à présent pour permettre à l'antenne que la P.I.R.E. ou le coefficient G/T ainsi que le diagramme restent dans des limites acceptables.

Pour les antennes d'émission, une première solution consiste à surdimensionner les amplificateurs de puissance et à leur faire délivrer une puissance supérieure aux spécifications. Mais une consommation excessive d'énergie n'est jamais favorable, surtout dans une application spatiale. De plus, cette solution ne permet pas de corriger les remontées des lobes secondaires qu'entraînent les pannes.

Une seconde solution, qui est applicable à la fois à l'émission et à la réception, consiste à prévoir un nombre d'éléments rayonnants supérieur aux besoins. Par exemple si, pour répondre aux spécifications, il faut un nombre N de sources rayonnantes, on en ajoutera un nombre Q pour tenir compte des pannes. Cette solution présente également l'inconvénient de nécessiter une surconsommation d'énergie en début de vie de l'antenne.

De plus, si le réseau formateur de faisceau est passif, c'est-à-dire si l'amplitude et la phase du signal d'alimentation de chaque élément ne sont pas commandables, les performances initiales doivent être surdimensionnées pour que l'antenne résiste aux pannes. Cette contrainte oblige à prévoir un surdimensionnement et, le plus souvent, elle ne permet pas de compenser les effets des pannes ; en particulier, des performances sensibles telles que le niveau des lobes secondaires sont dégradées sans possibilité de compensation. Si le réseau formateur de faisceau est actif, on peut reconfigurer l'antenne après apparition des pannes ; mais, dans ce cas; subsiste l'inconvénient - mentionné ci-dessus - de surconsommation en début de vie.

Dans une troisième solution, on prévoit des redondances des amplificateurs et, éventuellement, dans le réseau formateur de faisceau. Par exemple, on prévoit un certain nombre d'amplificateurs en réserve pour remplacer des amplificateurs défaillants. Pour que le câblage reste dans des limites raisonnables de simplicité et d'encombrement, chaque amplificateur en réserve ne peut être affecté qu'au remplacement d'un nombre très limité d'amplificateurs actifs. Cette contrainte ne permet pas de minimiser le nombre d'amplificateurs en réserve. De plus, le remplacement nécessite des équipements complémentaires tels que des éléments de commutation, ce qui rend la réalisation plus complexe et accroît la masse et le coût ainsi que l'encombrement. Bien que cette solution permette théoriquement de préserver les performances, elle n'est cependant pas toujours satisfaisante, car l'augmentation de la masse et de l'encombrement ne sont pas optimales, surtout pour les applications spatiales

Dans une quatrième solution, connue de US-A-5 083 131, on imagine de compenser la défuillance d'un élément par une action compensatrice sur les éléments adjacents. Cette solution offre l'inconvénient de faire travailler les éléments adjacents en dehors de leurs spécifications.

L'invention remédie à ces inconvénients.

Elle permet de conserver des performances d'émission et/ou de réception optimales avec une augmentation minimale de masse et d'encombrement.

L'antenne selon l'invention est caractérisée en ce que le réseau émetteur (ou récepteur) comporte un nombre d'éléments et de chaînes actives associées qui est supérieur aux besoins en émission (ou réception), et en ce que, en fonctionnement, le nombre d'éléments, et donc de chaînes actives, utilisés est égal aux besoins.

Ainsi, dans le cas de l'émission, tant en début de vie de l'antenne (avant les pannes) qu'ultérieurement, on n'est pas obligé de prévoir une surconsommation.

Quand une chaîne active tombe en panne, la chaîne active d'un (ou plusieurs) élément(s) préalablement inutilisé(s) est(sont) mise en action. L'emplacement de cet élément activé est choisi pour que l'émission (et/ou la réception) continue de répondre aux besoins. Autrement dit, la possibilité de maintien des performances est facilitée par le degré de liberté supplémentaire que constitue le choix de l'emplacement de l'élément de remplacement. Cette propriété est particulièrement importante lorsque les alimentations en amplitude et en phase des éléments ne peuvent être modifiées (c'est-à-dire quand le réseau formateur de faisceau est de type passif) car, si on ne disposait pas de cette possibilité de choix, les performances de l'antenne risqueraient de se dégrader malgré l'activation d'un élément après la panne d'un autre élément.

Les augmentations de masse et de complexité qu'entraînent les dispositions de l'invention sont inférieures aux augmentations correspondantes pour les antennes connues qui offrent une bonne résistance aux pannes. En effet, le nombre de chaînes actives en réserve est minimisé.

Ainsi, selon une caractéristique de l'invention, le nombre d'éléments en réserve et leurs alimentations est égal au nombre minimal nécessaire pour répondre aux besoins, compte tenu des possibilités de pannes pouvant intervenir au cours de la durée de vie de l'antenne.

Pour dimensionner une antenne selon l'invention, on procède de la façon suivante : on dimensionne l'antenne raréfiée de façon à ce qu'elle réponde à l'ensemble des besoins spécifiés. La raréfaction consiste, à partir d'un réseau plein légèrement surdimensionné par rapport aux besoins, à supprimer un certain nombre Q de sources, afin de garantir, après la suppression, les performances de rayonnement spécifiées. La suppression est effectuée par optimisation du diagramme de rayonnement en utilisant par exemple la méthode décrite dans l'un des articles suivants :
- Y.T. LO et S.W. LEE : "A study of space-tapered arrays", IEEE Trans. Antennas Propagat., vol AP-14, n°1, Jan. 1966, pages 22-30 ;
- B.D. STEINBERG : "The peak sidelobe of the phased array having randomly located elements", IEEE Trans. Antennas Propagat., vol AP-20, n°2, March 1972, pages 129-136 ;
- M.I. SKOLNIK, J.W. SHERMAN III et F.C. OGG Jr. : "Statistically designed density-tapered arrays", IEEE Trans. Antennas Propagat., vol AP-12, March 1964, pages 408-417 ;
- Y.TSUNODA et N. GOTO : "Sidelobe suppression of planar arrays antennas by the multistage decision method", IEEE Trans. Antennas Propagat., vol AP-35, n°9 Sep. 1987, pages 1017-1021 ;
- T. NUMAZAKI, S. MANO, T. KATAGI et M. MIZUSAWA : "An improved thinning method for density tapring of planar arrays antennas", IEEE Trans. Antennas Propagat., vol AP-35, n°9 Sep. 1987, pages 1066-1070.

L'antenne obtenue après le calcul effectué avec la méthode d'optimisation nécessite un nombre N de sources actives pour satisfaire aux besoins. Les Q sources supprimées sont considérées comme nominalement inutiles.

Les sources inutiles sont équipées de la même électronique que les sources utiles, mais chaque source non-utile est nominalement non active. Ce type de redondance est appelé une "redondance froide". Comme indiqué ci-dessus, l'électronique des sources n'est activée qu'à l'apparition d'une panne. Le nombre de sources réactivées est par exemple égal au nombre de sources en pannes. Ces sources réactivées sont choisies pour garantir, dans tous les cas, que les performances de rayonnement répondent aux spécifications.

D'autres caractéristiques et avantages de l'invention apparaîtront avec la description de certains de ses modes de réalisation, celle-ci étant effectuée en se référant aux dessins ci-annexés sur lesquels :
la figure 1 est un schéma d'une antenne réseau active,
la figure 2 est un schéma d'un panneau connu d'éléments rayonnants,
la figure 3 est un schéma analogue à celui de la figure 2, mais pour un panneau selon l'invention, et
la figure 4 est un schéma d'antenne conforme à l'invention.

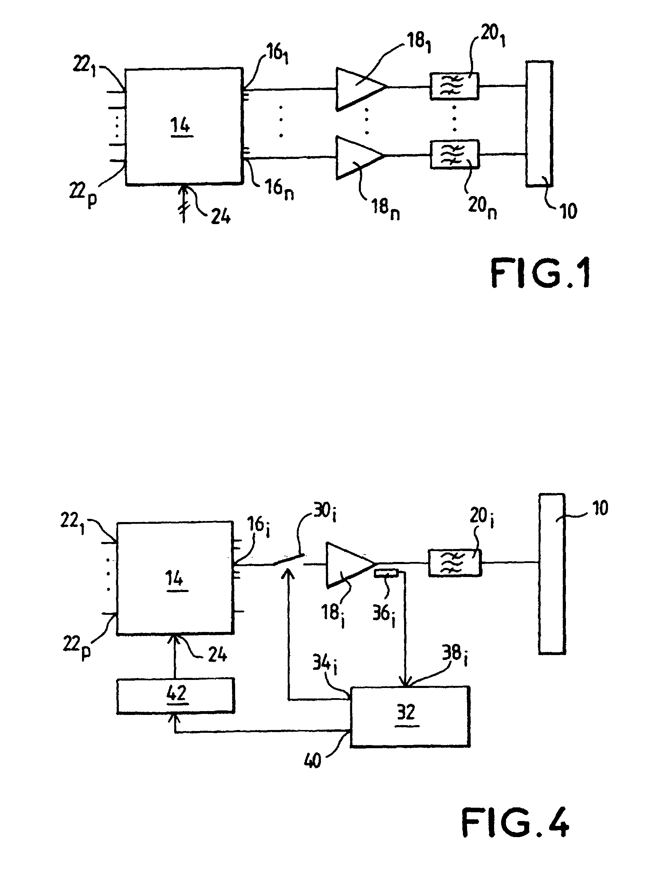

On décrira tout d'abord, en relation avec la figure 1, le principe connu d'une antenne à panneau d'éléments rayonnants (émetteurs ou récepteurs). Cette description concerne une antenne d'émission, mais on indiquera comment ces principes peuvent s'appliquer à une antenne de réception.

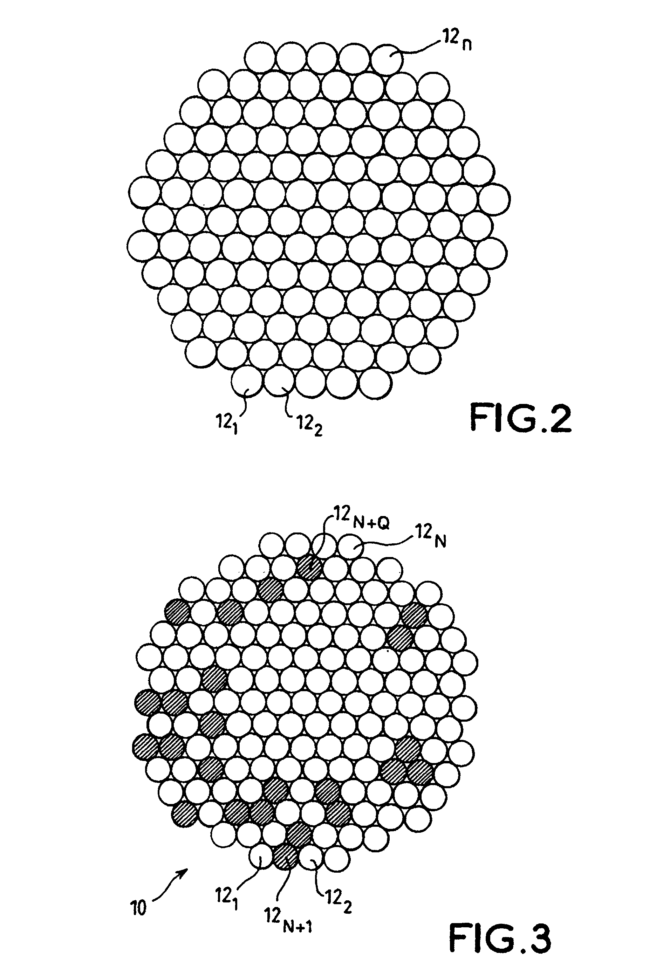

Le rayonnement des ondes électromagnétiques hyperfréquences est effectué à l'aide d'un panneau rayonnant 10 comprenant une pluralité d'éléments rayonnants 12₁, 12₂, ..., 12ₙ (figure 2). Dans l'exemple, les éléments 12 ont une forme circulaire. Leur nombre est de 151. Ils sont tous dans un même plan. Cependant, une autre forme de surface pourrait convenir.

Les éléments sont alimentés selon une loi d'amplitude et de phase permettant d'obtenir le diagramme voulu d'émission (ou réception) pour l'antenne.

A cet effet, l'antenne comporte un réseau formateur de faisceau 14. Il comporte n sorties 16₁, 16₂, ..., 16ₙ. Chaque sortie 16ᵢ est reliée à l'élément rayonnant correspondant 12ᵢ par l'intermédiaire d'un amplificateur de puissance 18ᵢ et d'un filtre 20ᵢ.

Le réseau 14 comporte par ailleurs p entrées 22₁, ..., 22p, p étant égal à 5 dans l'exemple. Chaque entrée correspond à l'activation d'un diagramme.

Quand un diagramme est activé sur une entrée 22ⱼ, le réseau 14 délivre une loi d'alimentation en amplitude et en phase qui correspond à un diagramme déterminé Dⱼ d'émission (ou réception). Chaque diagramme correspond à l'émission vers un emplacement déterminé, appelé spot. On peut aussi appliquer simultanément un signal d'activation sur plusieurs entrées d'activation 22 de façon à émettre simultanément plusieurs diagrammes.

Si pour chaque diagramme Dⱼ la programmation du réseau 14 - c'est-à-dire l'ensemble j de signaux délivrés sur les sorties 16 - ne peut être modifiée, le réseau est dit passif. Si la programmation peut être modifiée, par l'intermédiaire d'une entrée de commande 24, le réseau est dit actif.

Une antenne de réception présente la même structure avec les différences suivantes : l'énergie est transmise, en sens inverse de l'émission, du panneau 10 vers le réseau 14, par l'intermédiaire d'amplificateurs à faible bruit (non montrés).

Un mode de réalisation de l'invention va maintenant être décrit en se référant aux figures 3 et 4. Sur ces figures, on a adopté les mêmes chiffres de référence que ceux des figures 1 et 2 pour les composants analogues.

Pour tenir compte des occurrences de pannes qui peuvent intervenir au cours d'une durée de vie déterminée de l'antenne, le panneau 10 comporte N+Q éléments rayonnants. Le nombre N est le nombre d'éléments, et de chaînes actives associées, qui est nécessaire pour satisfaire correctement aux besoins d'émission, c'est-à-dire l'émission ayant le diagramme voulu et la puissance voulue, sans plus.

Au cours du fonctionnement, seuls ces N éléments - et les chaînes actives associées - sont utilisés, les chaînes actives des Q éléments restants étant normalement inactivées.

Ces Q éléments et leurs chaînes actives constituent une réserve qui est utilisée au fur et à mesure que le besoin s'en fait sentir quand certaines des N premières chaînes actives sont défaillantes.

Sur la figure 3, les éléments actifs 12₁, 12₂, ..., 12_{N} sont représentés en blanc et les éléments en réserve 12_{N+1}, ..., 12_{N+Q} sont représentés avec des hachures.

Dans cet exemple, le nombre N est de 127 et le nombre Q de 24.

Chaque élément rayonnant 12ᵢ - actif ou en réserve-est associé à un amplificateur 18ᵢ et un filtre 20ᵢ (figure 4).

L'activation (et l'inactivation) est réalisée en mettant sous tension (ou hors tension) les chaînes actives de l'antenne. Dans l'exemple, cette activation- (et l'inactivation) est obtenue en faisant intervenir un commutateur ou interrupteur 30ᵢ en série entre la sortie 16ᵢ du réseau 14 et l'amplificateur 18ᵢ. L'interrupteur est commandé par une sortie 34ᵢ d'une unité centrale 32.

A la sortie de chaque amplificateur 18ᵢ est connecté un détecteur 36ᵢ de panne et/ou de calibration qui transmet un signal indicateur de la puissance du signal en sortie de l'amplificateur 18ᵢ vers une entrée 38ᵢ de l'unité centrale 32.

Le réseau formateur de faisceau étant actif dans cet exemple, une sortie 40 de l'unité centrale 32 est connectée à l'entrée d'un circuit 42 de commande de reconfiguration du réseau 14 formateur de faisceau. La sortie du circuit 42 est reliée à l'entrée 24 du réseau 14.

Un élément rayonnant 12ᵢ est actif quand l'interrupteur correspondant 30ᵢ est fermé c'est-à-dire quand la chaîne active associée est sous tension ; il est inactif quand cet interrupteur est ouvert, c'est-à-dire quand la chaîne active est hors tension.

En début de vie de l'antenne, les emplacements des éléments inactifs 12_{N+1} ... 12_{N+Q} - dont les interrupteurs correspondants 30ᵢ sont ouverts - sont choisis en tenant compte notamment des possibilités futures de panne, de la durée de vie espérée de l'antenne et de son utilisation au cours de cette durée de vie.

Lorsqu'un détecteur 36ᵢ fournit à l'unité centrale 32 l'information selon laquelle l'élément activé correspondant 12ᵢ ne reçoit pas de signal ou un signal incorrect ou insuffisant, cette unité centrale 32 commande la fermeture d'un interrupteur 30ⱼ, préalablement ouvert, de façon à activer l'élément rayonnant 12ⱼ correspondant qui était en réserve. En d'autres termes, l'unité centrale met hors service la chaîne active défaillante et met en service une chaîne préalablement en réserve. A cet effet, on prévoit un programme en mémoire de l'unité centrale qui permet de fournir un nouvel ensemble de signaux sur les sorties 16 du réseau 14. Ainsi ce programme, tenant compte de l'élément i inactivé, choisit l'élément j à activer et redistribue les N signaux actifs sur les sorties 16 de manière à obtenir le diagramme d'émission voulue malgré la panne.

Dans une variante de réalisation à réseau formateur de faisceau de type passif - c'est-à-dire que les lois d'alimentation en amplitude et en phase ne sont pas commandées - en cas de panne, seule la géométrie de l'antenne est reconfigurée, c'est-à-dire qu'on redistribue les éléments rayonnants, par la redistribution des chaînes actives correspondantes, pour obtenir le diagramme désiré.

Dans le cas d'un réseau formateur de faisceau de type actif, après une panne, les lois de commande d'amplitude et de phase sont reprogrammées électroniquement, c'est-à-dire qu'on effectue à la fois une redistribution géométrique et une modification électronique.

Dans le cas d'une antenne embarquée, les programmes de redistribution - ou reconfiguration - sont soit embarqués, soit transmis, par télécommande, à distance depuis une station de contrôle.

Ce type de prévention des pannes des antennes réseau actives s'avère la seule solution satisfaisante pour des antennes réalisant des spots fixes et dont les lois d'alimentation en amplitude et en phase sont figées (réseau formateur de faisceau de type passif). Ces antennes ne présentant aucune configurabilité électronique, la perte de sources signifierait une perte sèche des performances de rayonnement. La solution conforme à l'invention d'une antenne raréfiée équipée de redondances froides présente l'avantage d'offrir une reconfigurabilité physique qui permet de rattraper ou compenser les dégradations.

Les besoins de PIRE sont satisfaits sans surdimensionnement de la puissance rayonnée et donc de la puissance consommée pour compenser les dégradations liées à l'apparition des pannes.

Quand on a affaire à une antenne à réseau formateur de faisceau de type actif, la redondance selon l'invention offre un degré de liberté supplémentaire pour reconfigurer l'antenne en cas de panne, ce résultat étant obtenu avec un accroissement de masse et de complexité inférieur aux augmentations correspondantes des solutions antérieurement connues.

L'antenne selon l'invention, qui comporte des éléments non actifs, mais activables en cas de besoin, est dite à "redondance froide".

Les éléments en réserve et leurs alimentations sont identiques aux éléments actifs et leurs alimentations.

Les dimensions du panneau 10 (fig. 3) de l'antenne conforme à l'invention sont seulement légèrement supérieures à celles d'un panneau classique répondant aux mêmes besoins d'émission (ou de réception). La comparaison des figures 2 et 3 donne un ordre de grandeur du surdimensionnement.

Les performances de l'antenne peuvent être maintenues au cours de sa durée de vie.

Il n'est pas nécessaire d'émettre de la puissance excédentaire pour tenir compte des pannes futures.

La liberté de choix de l'emplacement des éléments actifs permet, par rapport à une antenne du type de celle de la figure 2, d'obtenir des performances de rayonnements toujours optimisées, tant en début de vie qu'en cas de panne.

En d'autres termes, l'antenne selon l'invention présente un degré de liberté supplémentaire (l'emplacement de l'élément de remplacement), qui vient s'ajouter au choix de la phase de l'élément rayonnant. Cette antenne est ainsi très résistante aux pannes, et ses performances peuvent être optimisées, tant à l'émission qu'à la réception.

## Revendications

1. Antenne d'émission et/ou réception comprenant
• un réseau (10) d'éléments rayonnants (12) au nombre de N+Q ;
• des moyens de commande (14, 18, 20) pour activer N éléments et pour commander l'amplitude et/ou la phase des signaux émis ou reçus par chaque élément afin que l'antenne soit apte à émettre ou recevoir selon un diagramme déterminé ;
**caractérisée en ce qu'**elle comprend une pluralité de détecteurs (36ᵢ), chaque détecteur étant associé avec un élément rayonnant respectif (12ᵢ), afin de détecter si l'élément rayonnant respectif (12ᵢ) est en dysfonctionnement ; où
• N éléments rayonnants actifs est le nombre minimal nécessaire pour répondre aux besoins d'émission ou de réception le diagramme spécifié avec une puissance désirée,
• les Q éléments rayonnants additionnels sont a priori inactifs et gardés en réserve, et
• lesdits moyens de commande activent au moins un élément rayonnant additionnel de la réserve quand un détecteur de ladite pluralité de détecteurs détecte un dysfonctionnement de l'élément rayonnant actif respectif.

2. Antenne selon la revendication 1, **caractérisée en ce que** le dispositif de commande (32,42) sélectionne l'emplacement de l'élément en réserve qui est mis en action de façon à obtenir le diagramme d'émission et/ou réception spécifié.

3. Antenne selon la revendication 2, **caractérisée en ce que** le dispositif de commande (32, 42, 14) est apte à modifier la distribution des signaux appliqués à chaque élément pour optimiser le diagramme d'émission et/ou réception.

4. Antenne selon l'une quelconque des revendications précédentes, **caractérisée en ce qu'**un amplificateur (18ᵢ) étant associé à chaque élément (12ᵢ), le dispositif de commande permet de mettre en ou hors circuit chacun de ces amplificateurs.

5. Antenne selon l'une quelconque des revendications précédentes, **caractérisée en ce qu'**à chaque élément (12ᵢ) est associé un détecteur (36ᵢ) de panne de cet élément ou de son alimentation (18ᵢ).

6. Antenne selon l'une quelconque des revendications précédentes, **caractérisée en ce qu'**à l'alimentation (18ᵢ) de chaque élément est associé un détecteur (36ᵢ) de calibration.

7. Antenne selon l'une quelconque des revendications précédentes, **caractérisée en ce que** le nombre d'éléments en réserve et leurs alimentations est égal au nombre minimal nécessaire pour répondre aux besoins, compte tenu des pannes pouvant intervenir au cours de la durée de vie de l'antenne.

8. Antenne selon l'une quelconque des revendications précédentes, **caractérisée en ce que** les éléments en réserve et leurs alimentations sont identiques, respectivement, aux éléments actifs et à leurs alimentations.

9. Antenne d'émission selon l'une quelconque des revendications précédentes, **caractérisée en ce que** le dispositif de commande permet que la puissance d'émission soit maintenue sensiblement constante au cours de la durée de vie de l'antenne.

10. Antenne selon l'une quelconque des revendications précédentes, **caractérisée en ce que** le réseau a la forme d'un panneau.

11. Application de l'antenne selon l'une quelconque des revendications précédentes à l'émission et/ou la réception de signaux à bord d'un véhicule, notamment un véhicule spatial ou satellite.

## Claims

1. Transmit and/or receive antenna comprising
• an array (10) of N+Q radiating elements (12),
• means (14, 18, 20) for activating N elements and for controlling the amplitude and/or the phase of the signals transmitted or received by each element so that the antenna is able to transmit or receive according to a specified pattern;
**characterized in that** it includes a number of detectors (36ᵢ), each detector being associated with a respective radiating element (12ᵢ), in order to detect whether the respective radiating element (12ᵢ) has failed; where
• N active radiating elements is the minimum number needed for the specified pattern to meet the transmission or reception requirements with the desired power,
• the Q additional radiating elements are a *priori* inactive and kept in reserve, and
• said control means activate at least one additional radiating element of the reserve when a detector of said number of detectors detects a failure in the respective active radiating element.

2. Antenna according to claim 1, **characterized in that** the control device (32, 42) selects the location of the reserve element which is set into action in such a way as to obtain the specified transmit and/or receive pattern.

3. Antenna according to claim 2, **characterized in that** the control device (32, 42, 14) is able to modify the distribution of the signals applied to each element so as to optimize the transmit and/or receive pattern.

4. Antenna according to any of the preceding claims, **characterized in that** an amplifier (18ᵢ) being associated with each element (12ᵢ), the control device makes it possible to switch each of these amplifiers on or off.

5. Antenna according to any of the preceding claims, **characterized in that** with each element (12ᵢ) there is associated a detector (36ᵢ) of failure of this element or of its feed (18ᵢ).

6. Antenna according to any of the preceding claims, **characterized in that** with the feed (18ᵢ) of each element there is associated a calibration detector (36;).

7. Antenna according to any of the preceding claims, **characterized in that** the number of reserve elements and their feeds is equal to the minimum number necessary to meet the requirements, provision being made for failures which may occur during the lifetime of the antenna.

8. Antenna according to any of the preceding claims, **characterized in that** the reserve elements and their feeds are identical, respectively, to the active elements and to their feeds.

9. Transmit antenna according to any one of the preceding claims, **characterized in that** the control device enables the transmission power to be held substantially constant during the lifetime of the antenna.

10. Antenna according to any one of the preceding claims, **characterized in that** the array has the shape of a panel.

11. Application of the antenna according to any one of the preceding claims to the transmission and/or reception of signals on board a vehicle, especially a space vehicle or satellite.

## Patentansprüche

1. Sende- und/oder Empfangsantenne mit
- einem Netz (10) von N + Q strahlenden Elementen (12);
- Steuermitteln (14, 18,20) zum Aktivieren von N Elementen und zum Steuern der Amplitude und/oder der Phase der von jedem Element gesendeten oder empfangenen Signale, so dass die Antenne in der Lage ist, gemäß einem vorgegebenen Diagramm zu senden oder zu empfangen;
**dadurch gekennzeichnet, dass** sie eine Mehrzahl von Detektoren (36ᵢ) umfasst, von denen jeder einem strahlenden Element (12ᵢ) zugeordnet ist, um zu erfassen, ob das betreffende strahlende Element (12ᵢ) funktionsgestört ist; wobei
- N aktive strahlende Elemente die minimal notwendige Zahl ist, um den Sende- oder Empfangsbedürfnissen des vorgegebenen Diagramms mit einer gewünschten Leistung zu entsprechen,
- die Q zusätzlichen strahlenden Elemente a priori inaktiv sind und in Reserve gehalten werden, und
- die Steuermittel wenigstens ein zusätzliches strahlendes Element aus der Reserve aktivieren, wenn ein Detektor aus der Mehrzahl von Detektoren eine Funktionsstörung des entsprechenden aktiven strahlenden Elements erfasst.

2. Antenne nach Anspruch 1, **dadurch gekennzeichnet, dass** die Steuervorrichtung (32, 42) den Ort des Reserveelements, das in Betrieb genommen wird, so auswählt, dass das vorgegebene Sende- und/oder Empfangsdiagramm erhalten wird.

3. Antenne nach Anspruch 2, **dadurch gekennzeichnet, dass** die Steuervorrichtung (32, 42, 14) in der Lage ist, die Verteilung der an jedes Element angelegten Signale zu verändern, um das Sende- und/oder Empfangsdiagramm zu optimieren.

4. Antenne nach einem beliebigen der vorhergehenden Ansprüche, **dadurch gekennzeichnet, dass** ein Verstärker (18ᵢ) jedem Element (12ᵢ) zugeordnet ist, und dass die Steuervorrichtung es ermöglicht, jeden dieser Verstärker ein- oder auszuschalten.

5. Antenne nach einem beliebigen der vorhergehenden Ansprüche, **dadurch gekennzeichnet, dass** jedem Element (12ᵢ) ein Detektor (36ᵢ) zum Erfassen einer Störung dieses Elements oder seiner Versorgung (18ᵢ) zugeordnet ist.

6. Antenne nach einem beliebigen der vorhergehenden Ansprüche, **dadurch gekennzeichnet, dass** der Versorgung (18ᵢ) jedes Elements ein Kalibrierungsdetektor (36ᵢ) zugeordnet ist.

7. Antenne nach einem beliebigen der vorhergehenden Ansprüche, **dadurch gekennzeichnet, dass** die Zahl von in Reserve gehalten Elementen und ihrer Versorgungen gleich der zum Erfüllen der Bedürfnisse unter Berücksichtigung der im Laufe der Lebensdauer der Antenne möglichen Störungen minimal notwendigen Zahl ist.

8. Antenne nach einem beliebigen der vorhergehenden Ansprüche, **dadurch gekennzeichnet, dass** die in Reserve gehalten Elemente und ihre Versorgungen jeweils mit den aktiven Elementen und ihren Versorgungen identisch sind.

9. Sendeantenne nach einem beliebigen der vorhergehenden Ansprüche, **dadurch gekennzeichnet, dass** die Steuervorrichtung es ermöglicht, die Sendeleistung der Antenne im Laufe der Lebensdauer der Antenne im wesentlichen konstant zu halten.

10. Antenne nach einem beliebigen der vorhergehenden Ansprüche, **dadurch gekennzeichnet, dass** das Netz die Form eines Paddels hat.

11. Anwendung der Antenne nach einem beliebigen der vorhergehenden Ansprüche zum Senden und oder Empfangen von Signalen an Bord eines Fahrzeugs, insbesondere eines Raumfahrzeugs oder eines Satelliten.
